# DEMANDE DE BREVET EUROPEEN

(11) **EP 1 415 579 A1**
(43) Date de publication de la demande: **06.05.2004**
(21) Numéro de dépôt: 03292603.2
(22) Date de dépôt: 20.10.2003
(51) Int. Cl.: A47J 27/18, A47J 37/12

(54) **Ensemble de cuisson.**

(30) Priorité: 30.10.2002 FR 0213613
(71) Demandeur: Maestro Grande Cuisine, 26240 La Motte de Galaure (FR)
(72) Inventeur: Romero, Emmanuel, 07100 Saint-Marcel les Annonay (FR)
(74) Mandataire: Dossmann, Gérard

(57) **Abrégé**

Un ensemble de cuisson comprend un bac 2 formant une cavité ouverte vers le haut prévu pour pouvoir recevoir du liquide et muni de moyens de chauffage 24, les moyens de chauffage comprenant des éléments de chauffage 24 situé à l'extérieur de la cavité, et une goulotte périphérique 5 entourant le bord supérieur 4 du bac 2 pour la récupération de condensats.

## Description

La présente invention concerne un ensemble de cuisson, notamment un ensemble de cuisson permettant la cuisson de produits variés, selon différents procédés de cuisson, en faibles ou en grandes quantités.

Les dispositifs de cuisson, utilisés notamment dans la restauration commerciale, comprennent généralement des modules de cuisson spécifiques, tels que des marmites, pour la cuisson à l'eau de légumes, de pâtes ou de riz, des cuiseurs à pâtes, ou des cuiseurs à vapeur qui sont adaptés pour la préparation de quantités importantes de produits. De tels modules de cuisson sont peu adaptés pour la préparation de petites quantités de produits ou « portions ».

La cuisson des portions de légumes, de pâtes, de riz ou de poisson est généralement réalisée à l'aide de récipients placés sur des feux tels que des feux vifs ou brûleurs à gaz. L'utilisation des feux vifs pour la préparation de portions, et notamment de portions de légumes ou de poisson, monopolise ces feux vifs et empêche leur utilisation pour des préparations de produits pour lesquelles ils sont indispensables. Par ailleurs, la préparation de portions de, légumes, de pâtes, de riz ou de poisson à l'aide de tels récipients utilisés avec des feux vifs nécessite de nombreuses manipulations pour remplir et vider ces récipients. En outre, lors de cuisson à l'eau ou à la vapeur, il existe des risques de débordement des produits sur les plans de cuisson pouvant nécessiter un nettoyage ultérieur. Par ailleurs, pour laisser accessibles d'autres feux vifs utilisés pour la préparation de produits requérant une attention et une présence d'un préparateur, les récipients pour la cuisson des portions sont généralement disposés sur les feux vifs situés à l'arrière des modules de feux vifs. Il en résulte une ergonomie peu adaptée du fait de l'éloignement des récipients du bord d'un module de cuisson. En outre, les performances obtenues pour la cuisson des portions avec de tels ustensiles sont variables selon le type et la qualité du récipient utilisé, pouvant présenter des dimensions trop importantes ou pas assez importantes en regard des dimensions du feu vif, ou un fond bosselé.

La présente invention a pour objet un ensemble de cuisson permettant la préparation de quantités importantes ou de portions, et notamment de plusieurs portions simultanément.

L'invention a également pour objet un ensemble de cuisson permettant la préparation de produits selon différents modes de cuisson, notamment par trempage dans l'eau, cuisson à la vapeur ou contact avec un élément chaud.

L'invention concerne encore un ensemble de cuisson présentant une ergonomie satisfaisante et une hygiène améliorée, prévu pour éviter des débordements de liquide et permettant une récupération de condensats ou de liquide tout en empêchant une pollution du bac par des liquides répandus accidentellement sur un plan de travail.

Un tel ensemble de cuisson comprend un bac formant une cavité ouverte vers le haut, prévu pour pouvoir recevoir du liquide et muni de moyens de chauffage, une goulotte périphérique entourant le bord supérieur du bac et des éléments de chauffage situés à l'extérieur de la cavité.

Le bac formant une cavité ouverte vers le haut, pouvant être rempli de liquide et muni de moyens de chauffage du liquide permet la cuisson dans l'eau de produits, comme des légumes, des pâtes ou du riz, et ce en quantités importantes. Les éléments de chauffage situés à l'extérieur permettent de chauffer des produits versés directement dans le bac. Les éléments de chauffage ne seront pas en contact avec les éléments chauffants, qui ne seront donc pas salis. En outre, les éléments chauffants situés à l'extérieur facilitent un nettoyage du bac après usage pour la cuisson en vrac, directement dans le bac. Lors d'une cuisson utilisant un liquide disposé dans le fond du bac, il n'est pas nécessaire de prévoir une hauteur minimum de liquide dans le fond du bac.

Les produits peuvent être cuits en utilisant de l'eau chauffée ou directement posés sur le fond chauffé du bac de cuisson, par exemple pour saisir de la viande ou du poisson. Avantageusement, le fond peut présenter une épaisseur suffisante pour sa tenu mécanique lors de son chauffage à des températures élevées, de l'ordre de 400°C autorisant des cuissons par contact, ainsi que pour offrir une inertie de chauffage satisfaisante pour de telles cuissons. Le fond pourra présenter une épaisseur supérieure à une épaisseur de parois latérales du bac.

La goulotte périphérique entourant le bord supérieur du bac permet, par exemple dans le cas d'une cuisson en saturation de vapeur rendue possible en disposant un couvercle sur l'ensemble de cuisson, de récupérer des condensats formés sur le couvercle ou sur le cadre de support. En outre, la goulotte périphérique entourant le bac de cuisson permet d'éviter que des produits, et notamment des liquides tombés sur un plan de travail entourant le bac de cuisson ne tombent dans le bac et polluent le liquide ou les produits pendant leur cuisson. Avantageusement, la goulotte forme avec le bac de cuisson un profil permettant d'accrocher sur le bord supérieur du bac des accessoires de cuisson.

Avantageusement, l'ensemble de cuisson comprend un cadre de support amovible prévu pour être posé de façon amovible en appui sur le bord supérieur du bac et muni de moyens d'accrochage pour suspendre au moins un panier de cuisson. Le cadre de support amovible prévu pour être posé sur le bord supérieur du bac permet de disposer des paniers de cuisson en suspension. Le cadre de support peut permettre de suspendre simultanément plusieurs paniers de petite dimension pour la cuisson de différentes portions, que cela soit en trempant dans l'eau ou par saturation de vapeur, à l'aide de paniers percés, ou par chauffage d'un panier ou à la façon d'un bain-Marie, avec des paniers à parois pleines. Le cadre défini un support de dimensions adaptées à celles généralement rencontrées pour des paniers de cuisson.

Dans un mode de réalisation, le cadre de support comprend une jupe périphérique prévue pour entourer une paroi périphérique interne de la goulotte périphérique lorsque le cadre de support est posé sur le bord supérieur du bac. La jupe périphérique permet un centrage du cadre de support sur le bac, et peut être réalisée de façon simple. Le positionnement du cadre de support amovible sur le bac de cuisson se fait de façon simple et sûre sans risque de chute du cadre de support. En outre, le cadre de support, lorsqu'il est posé sur le bac, forme un passage périphérique de condensation débouchant dans la goulotte périphérique.

Dans un mode de réalisation, les moyens d'accrochage comprennent des réglettes disposées sur un pourtour intérieur du cadre de support. Les réglettes venant en saillie vers l'intérieur du cadre de support forment des surfaces sur lesquelles des bords de paniers peuvent venir reposer pour suspendre les paniers au-dessus du bac de cuisson. Les réglettes d'accrochage peuvent être disposées de façon continue sur le pourtour intérieur du cadre de support ou divisées en secteurs, en étant agencées pour la suspension de paniers de différentes dimensions.

Avantageusement, les moyens d'accrochage comprennent au moins une réglette transversale pour diviser le cadre de support. Une réglette transversale permet de fournir une surface d'appui, notamment pour un panier de cuisson présentant des dimensions inférieures à celles définies par des réglettes d'accrochage disposées sur un pourtour intérieur du cadre de support.

De préférence, une réglette transversale peut être amovible et prévue pour être posée sur des réglettes de pourtour. La position de la réglette transversale peut facilement être adaptée en fonction des dimensions des paniers de cuisson envisagés. La réglette transversale amovible peut être retirée, par exemple pour suspendre un panier de grande dimension pouvant être suspendu directement sur les réglettes de pourtour intérieur du cadre de support.

Dans un mode de réalisation, l'ensemble de cuisson comprend un couvercle prévu pour reposer sur le cadre en fermant une ouverture supérieure de la cavité. Le couvercle permet la cuisson en saturation de vapeur directement dans le bac, dans un bac de grande dimension suspendu sur le cadre de support, ou encore dans une pluralité de paniers de cuisson de portions suspendus sur le cadre de support. Lors d'une cuisson en saturation de vapeur, des condensats se formant sur une face inférieure du couvercle peuvent glisser jusqu'à un pourtour périphérique du couvercle et seront récupérés dans la goulotte périphérique.

Dans un mode de réalisation, l'ensemble de cuisson comprend des moyens de filtrage, tels qu'une crépine, obstruant une vidange d'évacuation de liquide contenue dans la cavité du bac. De préférence la vidange d'évacuation du liquide débouche sur un fond du bac. Les moyens de filtrage permettent l'utilisation du bac pour la cuisson directement de produits par immersion dans l'eau.

Dans un mode de réalisation, l'ensemble de cuisson comprend une vidange de goulotte pour évacuer un liquide présent dans la goulotte. Une telle vidange peut être permanente, c'est-à-dire qu'elle reste ouverte pour une évacuation continue de liquide présent dans la goulotte.

La présente invention et ses avantages seront mieux compris à l'étude de la description détaillée d'un mode de réalisation pris à titre d'exemple nullement limitatif et illustré par les dessins annexés, sur lesquels :
- la figure 1 est une vue en coupe selon I/I d'un ensemble de cuisson selon un aspect de l'invention ;
- la figure 2 est une vue de dessus de l'ensemble de cuisson selon la figure 1, muni d'un élément de séparation d'un cadre de support ;
- la figure 3 est une vue de dessus de l'ensemble de cuisson selon la figure 2 muni de paniers de cuisson ; et
- la figure 4 est une vue en coupe selon IV/IV de l'ensemble de cuisson selon la figure 3.

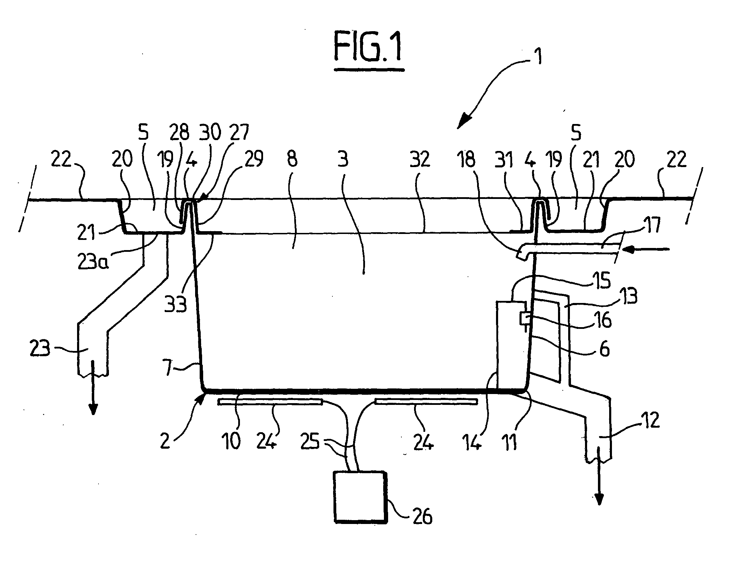

Sur la figure 1, un ensemble de cuisson référencé 1 dans son ensemble comprend un bac de cuisson 2 formant une cavité 3 ouverte vers le haut et présentant un bord supérieur 4, et une goulotte périphérique 5 entourant le bord supérieur 4 du bac de cuisson 2.

Le bac de cuisson 2, présentant en vue de dessus une forme générale rectangulaire comprend deux parois latérales 6, 7 de petits côtés, et des parois latérales 8, 9 de grands côtés dont une seule est visible sur la figure 1, et une paroi de fond 10. Le bac de cuisson 2 comprend une vidange sous la forme d'un orifice 11 formé à la jonction entre la première paroi latérale de petit côté 6 et le fond 10, prolongé par une conduite d'évacuation 12. Un dispositif de trop-plein comprend un tube 13 débouchant d'un côté sur la première paroi latérale de petit côté 6, sensiblement à mi-hauteur, et du côté opposé dans la conduite d'évacuation 12. La paroi de fond 10 peut être légèrement inclinée du côté de la première paroi latérale de petit côté 6 pour favoriser une évacuation d'un liquide vers l'orifice 11 de la conduite d'évacuation 12. En outre, la paroi de fond 10 présente une épaisseur supérieure à celle des parois latérales 6 à 9

Des moyens de filtrage sous la forme d'une crépine perforée 14 sont prévus pour empêcher le passage de produit à travers la conduite d'évacuation 12. La grille 14 se présente sous la forme d'une plaque perforée 14 comprenant un bras de fixation 5 prévu pour coopérer avec les plots 16 fixés sur la paroi latérale de petit côté 6, en venant en contact avec la paroi de fond 10, et en comprenant des bords rabattus non-visibles sur la figure 1, et venant en contact avec la paroi latérale de petit côté 6.

Le bac de cuisson 2 comprend encore une conduite d'alimentation 17 pour alimenter en liquide une buse d'alimentation 18 disposée sur la première paroi latérale de petit côté 6, à une hauteur supérieure à la hauteur de l'orifice du tube de trop-plein 13 situé sur la première paroi latérale de petit côté 6.

La goulotte périphérique 5 présente en section un profil sensiblement rectangulaire ouvert vers le haut, et comprend une paroi intérieure 19, une paroi extérieure 20 et une paroi de fond 21. Le bord supérieur de la paroi extérieure 20 se situe dans un plan horizontal défini par un plan de travail 22. On notera que le bord supérieur de la paroi intérieure 19, ainsi que le bord supérieur 4 du bac de cuisson 2 se situent également dans le plan du plan de travail 22.

On notera également que le plan de travail 22, la goulotte périphérique 5 et les parois du bac de cuisson 2 peuvent être formés dans une unique tôle de matériau ou des tôles de matériau assemblées, par exemple par soudage, de sorte que la goulotte périphérique 5 et le bac de cuisson 2 présentent une surface orientée vers le haut ne présentant pas de discontinuité lorsqu'on se déplace de l'extérieur de la goulotte 5 vers l'intérieur du bac de cuisson 2.

Du côté de la seconde paroi latérale de petit côté 7 du bac de support 2, la goulotte périphérique 5 comprend une vidange sous la forme d'un tuyau d'évacuation 23 débouchant à une extrémité 23a dans la goulotte périphérique 5 en affleurant la paroi de fond 21.

L'ensemble de cuisson 1 comprend également des éléments chauffants 24, ici au nombre de 2, et alimentés par l'intermédiaire de liaison 25 par une unité d'alimentation 26 reliée de façon non représentée à une source d'alimentation. Les éléments chauffants 24 sont situés à l'extérieur de la cavité du bac 2, en dessous de la paroi de fond 10. Comme les éléments chauffants 24 sont situés à l'extérieur du bac 2, on peut prévoir des éléments chauffants 24 du type électriques pour un chauffage par radiation de la paroi de fond 10, ou des éléments fonctionnant au gaz, du type brûleurs, prévus avec des conduits d'évacuation des produits de combustion.

L'ensemble de cuisson 1 comprend un cadre de support 27 présentant en section un profil sensiblement en U à ouverture orientée vers le bas avec un bras orienté situé à l'intérieur du cadre de support plus long qu'un bras situé à l'extérieur du cadre de support 27.

Le cadre de support 27 comprend une portion extérieure 28 prévue pour entourer la paroi intérieure 19 de la goulotte périphérique 5, une portion intérieure 29 prévue pour être entourée par la portion supérieure des parois latérales 6 à 9 du bac de cuisson 2, et une portion intermédiaire 30 reliant les bords supérieurs des portions extérieure 28 et intérieure 29. Le cadre de support 27 comprend des réglettes de suspension 31 à 34, une réglette 34 n'étant pas visible sur la figure 1, fixées sur le bord inférieur de la portion intérieure 29 et venant en saillie vers l'intérieur du cadre de support 27, sensiblement horizontalement. Les réglettes de suspension 31 à 34 sont au nombre de quatre et sont disposées sur le pourtour intérieur du cadre de support 27, sur les quatre côtés.

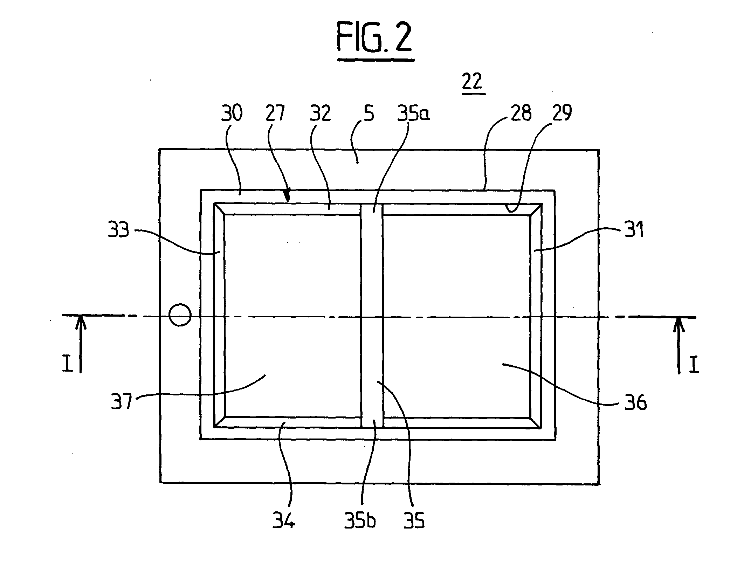

Sur la figure 2, le cadre de support 27 est muni d'une réglette amovible 35, de longueur sensiblement égale à la longueur d'un petit côté du cadre de support 27, et reposant par ses extrémités 35a, 35b sur les réglettes de support de grand côté 32, 34 du cadre de support 27. La réglette amovible 35 s'étend parallèlement aux réglettes de support de petit côté 31, 33 du cadre de support 27. La position de la réglette 35 sur les réglettes de support 32, 34 peut être choisie, c'est-à-dire que l'on peut choisir la distance séparant la réglette amovible 35 d'une part de la première réglette de petit côté 31 et de la seconde réglette de petit côté 33. La réglette amovible 35 permet de diviser le cadre de support 27 en deux cadres 36, 37 de plus petite dimension. Le premier cadre 36 est défini par la réglette amovible 35, d'une portion de la première réglette de grand côté 32, la réglette de petit côté 31, et une portion de la seconde réglette de grand côté 34. Le second petit cadre 37 est défini par la réglette amovible 35, une portion de la première réglette de grand côté 32, la seconde réglette de petit côté 33, et une portion de la seconde réglette de grand côté 34.

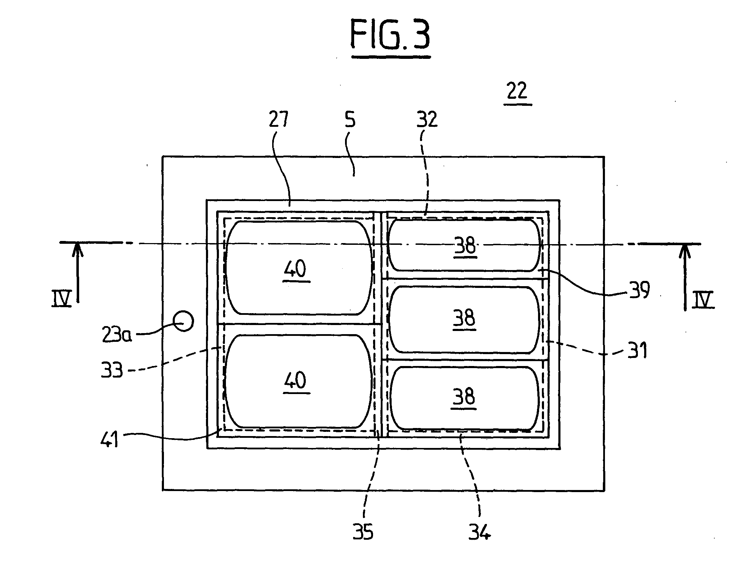

Sur la figure 3, des paniers de cuisson sont suspendus sur le cadre de support 27 muni de la réglette amovible de séparation 35 représentée en pointillés. Trois paniers de petite portion 38 similaires sont suspendus dans le petit cadre de support 36. Un panier se présente sous la forme d'un récipient dont le bord supérieur est prolongé par une collerette 39 permettant de suspendre le panier 38. Les paniers 38 sont disposés en étant en contact par leurs bords adjacents, c'est-à-dire qu'un panier présente une longueur sensiblement égale à la largeur du cadre de support 36, et une largeur sensiblement égale au tiers de la longueur du petit cadre de support 36. Deux paniers latéraux 38 viennent en contact par leur collerette 39 sur une portion de la réglette amovible de séparation 35, du côté opposé sur une portion de la réglette de petit côté 31, et sur un côté de leur longueur avec une portion de réglette de grand côté 32, 34 du cadre de support 27. Le panier 38 situé au centre vient en appui d'un côté sur une portion centrale de la réglette amovible, et du côté opposé sur une portion centrale de la première réglette de petit côté 31 du cadre de support 27.

Deux paniers de grande portion 40 sont disposés en étant suspendus à l'aide du second petit cadre de support 37. Un panier 40 comprend une collerette 41 en appui d'un côté sur la réglette amovible de séparation 35, du côté opposé sur la seconde réglette de petit côté 33du cadre de support, et sur un côté sur une portion de la première réglette de grand côté 32 du cadre de support 27. Les paniers 40 sont en contact mutuel par les bords libres de leur collerette 41.

La réglette amovible de séparation 35 permet donc, par la formation de cadres de support de plus petite dimension 36, 37, la suspension de paniers de portion présentant des dimensions inférieures à celles du cadre de support 27. En outre, l'utilisation d'une pluralité de paniers de cuisson suspendus simultanément à l'aide du cadre de support 27 permettent la préparation simultanément d'une pluralité de portions composées de produits différents et cuits selon un même procédé de cuisson.

Bien entendu, on pourrait prévoir un panier de grande dimension suspendu directement sur les quatre réglettes 31 à 34 du cadre de support 27.

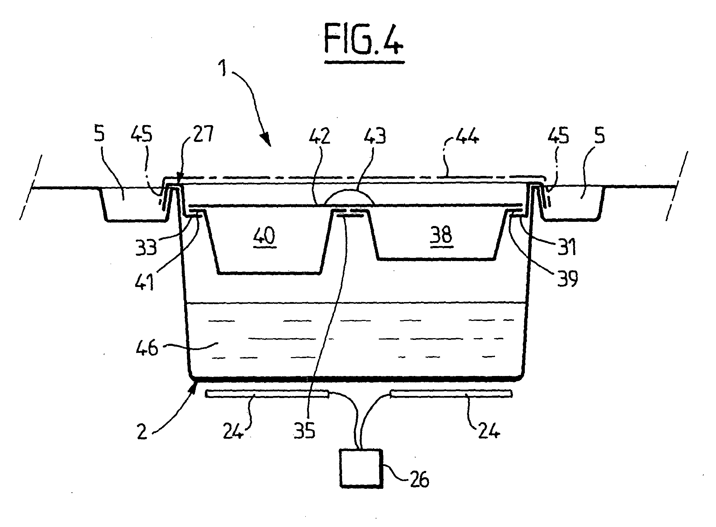

Sur la figure 4, les paniers de support 38 et 40 sont recouverts par un couvercle 42 muni d'une poignée 43 et venant en appui directement sur les bords supérieurs des paniers de cuisson 38, 40. On peut également prévoir un couvercle 44 sous la forme d'une plaque rectangulaire de dimensions sensiblement supérieures à celles d'un pourtour extérieur du cadre de support 27 et munie sur son pourtour d'une jupe 45 s'étendant vers le bas à partir du bord de la plaque 44 pour entourer le cadre de support 27.

Tel que représenté sur la figure 4, le bac 2 est rempli d'un liquide 46, sensiblement jusqu'à un tiers de sa hauteur.

Le fonctionnement de l'ensemble de cuisson est décrit par la suite en conservant les références utilisées pour les figures 1 à 4 décrites précédemment.

Dans un premier mode de fonctionnement, on peut utiliser le bac de cuisson pour cuire des produits par immersion dans de l'eau chauffée. Pour ce faire, on remplit le bac 2 à l'aide de la buse d'alimentation en eau 18, en prenant soin préalablement d'empêcher une sortie d'eau par la conduite d'évacuation 12, par exemple en bouchant l'orifice 11 de la conduite d'évacuation 12. Ensuite, on peut plonger directement les produits dans l'eau. Lorsque les produits sont cuits, on peut récupérer les produits puis vider l'eau ou vider l'eau et récupérer les produits qui sont empêchés de sortir par la conduite d'évacuation 12 par la grille de filtrage 14.

Dans un deuxième mode de fonctionnement, on peut prévoir de disposer le cadre de support 27 sur le bord supérieur 4 du bac de cuisson 2, et d'y suspendre un unique panier de cuisson de grande dimension.

On peut prévoir un panier de cuisson à parois pleines. Dans ce cas, on peut remplir le bac de cuisson 2 en eau jusqu'à un niveau inférieur à une extrémité inférieure du bac de cuisson. La chaleur est apportée au panier de cuisson par l'intermédiaire de vapeur d'eau formée entre la surface supérieure du liquide et les paniers de cuisson, à la façon d'un bain Marie.

On peut également prévoir un panier de cuisson perforé, et un remplissage du bac de cuisson 2 jusqu'à un niveau supérieur à celui d'une paroi de fond du panier de cuisson, de façon à cuire les produits directement dans l'eau. Dans ce cas, la récupération des produits cuits par immersion dans l'eau se fait simplement en récupérant le panier de cuisson qui sert alors également d'égouttoir.

On peut également prévoir de disposer des paniers prévus pour recevoir des poches d'aliments précuisinés et sous vide, prévues pour être remises en température par immersion de la poche sous vide dans l'eau. Compte tenu des dimensions généralement rencontrées pour de telles poches sous vide, il est souvent nécessaire de prévoir des paniers de plus grandes dimensions que des paniers de cuisson pour portion, de sorte qu'un cadre de support prévu pour des paniers de cuisson ne soit pas adapté pour supporter des paniers d'immersion de poches sous vide. Dans ce cas, on pourra avantageusement prévoir des paniers d'immersion de poche sous vide munis de moyens d'accrochage directement sur le bord du bac, en venant s'accrocher sur la nervure formée sur le pourtour du bord supérieur du bac 2. Dans ce cas, on pourra retirer le cadre de support pour l'accrochage d'une ou de plusieurs paniers d'immersion de poches sous vide.

On peut également prévoir de remplir le bac de cuisson 2 avec un niveau d'eau inférieur à celui d'un fond du panier de cuisson perforé, et fermer le bac de cuisson 2 à l'aide d'un couvercle 42 fermant le bac de cuisson ou d'un couvercle 44 recouvrant le cadre de support 27. Dans ce cas, on cuit les produits dans une atmosphère saturée en vapeur.

Les différents modes de cuisson évoqués auparavant peuvent être mis en oeuvre pour des petites quantités de produits ou portions, en utilisant une compartimentation du cadre de support 27, par exemple à l'aide d'une réglette de séparation, et une pluralité de paniers de cuisson contenant des produits variés.

Pour la cuisson de différentes portions simultanément à l'aide du même bac de cuisson, on peut prévoir un panier de cuisson suspendu sur des réglettes du pourtour du cadre de support et comprenant une pluralité de réceptacles séparés par des parois pour recevoir chacun un produit différent. Néanmoins, un tel mode de réalisation ne permet pas de retirer un panier contenant un produit particulier dont la cuisson est terminée.

Les éléments de chauffage étant situés à l'extérieur de la cavité définie par le bac de cuisson 2, sous la paroi de fond 10 ne sont pas en contact avec des produits cuits en vrac dans le bac de cuisson. Dès lors, les éléments chauffants 24 ne risquent pas d'être salis et de nécessiter un nettoyage pouvant s'avérer pénible, ou d'entraver le nettoyage du fond de cuve. En outre, dans le cas d'une cuisson avec un remplissage faible du bac de cuisson 2, il n'est pas nécessaire de prévoir une hauteur minimum d'eau pour recouvrir les éléments chauffants. Les éléments chauffants chauffent directement la paroi de fond 10 du bac de cuisson 2 qui transmet la chaleur par conduction à l'eau située dans le fond du bac de cuisson 2.

En outre, les éléments de chauffage situés à l'extérieur de la cuve permettent d'utiliser le fond de cuve, de préférence épais, pour les cuissons par contact, par exemple pour faire rissoler des oignons ou pour poêler une pièce de viande.

Lors d'une cuisson avec recouvrement des paniers ou en saturation de vapeur, avec fermeture de l'ouverture supérieure du bac de cuisson, à l'aide d'un couvercle, de la vapeur peut se déposer sous forme de condensat sur une surface inférieure du cadre de support 27 ou du couvercle 44. Les parois de ces couvercles redescendant vers le bas et définissant des jupes entourant une paroi intérieure 19 d'une goulotte périphérique 5 définissent un chemin forcé pour des condensats et présentent, de par leur contact avec l'air ambiant et leur éloignement par rapport aux sources de chauffage une température inférieure favorisant la condensation, de sorte que la vapeur tendant à s'échapper se condense sur les surfaces intérieures de ces parois et s'écoule sous forme liquide pour être récupérée dans la goulotte périphérique 5. Ces jupes forment un chemin d condensation et de passage périphérique des condensats.

Par ailleurs, on notera que le bord supérieur du bac de cuisson se situe sensiblement dans le plan de travail 22 de sorte qu'il ne comprend pas d'élément en saillie par rapport au plan de travail pouvant gêner un préparateur manipulant des ustensiles de cuisine. En cas de chute de produit ou de liquide sur le plan de travail 22, la goulotte périphérique 5 empêche qu'ils ne s'écoulent vers le bac de cuisson 2 et ne polluent son contenu. La goulotte périphérique 5 agit comme un barrage pour des éléments polluants.

Grâce à l'invention, on obtient un ensemble de cuisson permettant d'effectuer la cuisson de quantités importantes de produits ou la cuisson de portions de produits pour des préparations de plus petites quantités et plus variées, selon différents modes de cuisson en fonction des produits à préparer. Le passage d'un mode de cuisson à un autre peut être effectué rapidement. L'ensemble de cuisson est facile d'entretien. Le passage d'un mode de cuisson de grandes quantités à un mode de cuisson de portions se fait simplement en posant un cadre de support ou dans le cas où la cadre de support est déjà posé, simplement en utilisant des paniers de cuisson différents, notamment en fractionnant le cadre de support en cadres adjacents de plus petites dimensions. La goulotte périphérique permet d'évacuer des condensats pouvant se former en mode de cuisson avec saturation de vapeur ou de récupérer des liquides s'écoulant sur le plan de travail.

L'ensemble de cuisson, selon un aspect de l'invention, comprend un bac formant une cavité ouverte vers le haut et équipé de moyens de chauffages adaptés pour permettre à la fois la cuisson par contact, pour saisir ou faire rissoler, ainsi que la cuisson par immersion dans un liquide directement dans le bac, sans usage de panier. L'ensemble de cuisson permet en outre une cuisson en atmosphère contenant de la vapeur, ou par chauffage de panier à l'aide d'eau chauffée, c'est-à-dire à la façon d'un bain Marie, et ce sans qu'il soit nécessaire de prévoir une quantité d'eau importante dans le bac.

## Revendications

1. Ensemble de cuisson comprenant un bac (2) formant une cavité ouverte vers le haut prévu pour pouvoir recevoir du liquide et muni de moyens de chauffage (24), **caractérisé par le fait qu'**il comprend une goulotte périphérique (5) entourant le bord supérieur (4) du bac (2) et des éléments de chauffage situés à l'extérieur de la cavité.

2. Ensemble selon la revendication 1, **caractérisé par le fait qu'**il comprend des accessoires prévus pour être accroché sur le bord supérieur (4) du bac (2).

3. Ensemble selon l'une quelconque des revendications 1 ou 2, **caractérisé par le fait qu'**il comprend un cadre de support amovible (27) prévu pour être posé de façon amovible en appui sur le bord supérieur (4) du bac (2) et muni de moyens d'accrochage (31 à 34) pour suspendre au moins un panier de cuisson (38, 40).

4. Ensemble selon la revendication 3, **caractérisé par le fait que** le cadre de support comprend une jupe périphérique prévue pour entourer une paroi périphérique interne (19) de la goulotte périphérique (5) lorsque le cadre de support (27) est posé sur le bord supérieur (4) du bac (2).

5. Ensemble selon l'une quelconque des revendications précédentes 3 ou 4, **caractérisé par le fait que** les moyens d'accrochage (31 à 34) comprennent des réglettes disposées sur un pourtour intérieur du cadre de support (27).

6. Ensemble selon l'une quelconque des revendications 3 à 5, **caractérisé par le fait que** les moyens d'accrochage comprennent au moins une réglette transversale (35) pour diviser le cadre de support.

7. Ensemble selon la revendication 6, **caractérisé par le fait qu'**une réglette transversale est amovible et prévue pour reposer sur des réglettes de pourtour.

8. Ensemble selon l'une quelconque des revendications précédentes, **caractérisé par le fait qu'**il comprend un couvercle (44) prévu pour reposer sur le cadre de support (27) en fermant une ouverture supérieure de la cavité (3).

9. Ensemble selon l'une quelconque des revendications précédentes, **caractérisé par le fait qu'**il comprend des moyens de filtrage obstruant une vidange d'évacuation de liquide contenue dans la cavité (3) du bac (2).

10. Ensemble selon l'une quelconque des revendications précédentes, **caractérisé par le fait qu'**il comprend une vidange de goulotte périphérique (5) pour évacuer un liquide présent dans la goulotte périphérique (5).

11. Ensemble selon l'une quelconque des revendications précédentes, **caractérisé par le fait qu'**une paroi de fond du bac présente un épaisseur supérieure à des parois latérales du bac.
